# EUROPÄISCHE PATENTANMELDUNG

(11) **EP 3 048 296 A1**
(43) Veröffentlichungstag der Anmeldung: **27.07.2016**
(21) Anmeldenummer: 16150031.9
(22) Anmeldetag: 04.01.2016
(51) Int. Cl.: F03D 1/06, F03D 80/40

(54) **VERFAHREN ZUM ENTEISEN EINES ROTORBLATTS EINER WINDENERGIEANLAGE**

(30) Priorität: 22.01.2015 DE 102015000636
(71) Anmelder: Senvion GmbH, 22297 Hamburg (DE)
(72) Erfinder: RZEPKA, Marek, 24848 Kropp (DE); SCHÖNFELD, Krischan, Flensburg 24943 (DE); BOLZ, Jürgen, 20099 Hamburg (DE); WARFEN, Karsten, 23795 Söhren (DE)
(74) Vertreter: Seemann & Partner

(57) **Zusammenfassung**

Die Erfindung betrifft ein Verfahren zum Enteisen eines Rotorblatts (5) einer Windenergieanlage (1), wobei mittels eines Lüfters (22) ein Luftstrom (13, 14) durch das Rotorblatt (5) geführt wird, wobei der Luftstrom (13, 14) über ein Luftleitsystem (9) in einem Kreislauf geführt wird und zudem mittels einer Heizvorrichtung (21) der Luftstrom (13, 14) erwärmt wird.

Das erfindungsgemäße Verfahren zeichnet sich dadurch aus, dass ein Bruchteil des im Kreislauf geführten Luftstroms (13, 14) aus dem Kreislauf entfernt wird.

## Beschreibung

Die Erfindung betrifft ein Verfahren zum Enteisen eines Rotorblatts einer Windenergieanlage, wobei mittels eines Lüfters ein Luftstrom durch das Rotorblatt geführt wird, wobei der Luftstrom über ein Luftleitsystem in einem Kreislauf geführt wird und zudem mittels einer Heizvorrichtung der Luftstrom erwärmt wird.

Rotorblattenteisungsvorrichtungen von Windenergieanlagen und Verfahren zum Enteisen eines Rotorblatts einer Windenergieanlage sind grundsätzlich bekannt. Hierzu wird beispielsweise auf die EP 2 585 713 B1 der Anmelderin verwiesen.

Bei dem bekannten Verfahren zum Enteisen eines Rotorblatts einer Windenergieanlage weist das Rotorblatt einen ersten und einen zweiten Kanal innen im Rotorblatt zum Durchleiten eines Luftstromes auf, wobei der Luftstrom einen erwärmten Luftstrom umfasst, der in den ersten Kanal eingeleitet wird und wenigstens abschnittsweise in Richtung von der Rotorblattwurzel zur Rotorblattspitze in einer vorgebbaren Strömungsführung strömt und zum Enteisen wenigstens eines Abschnitts des Rotorblatts an wenigstens einem Teil einer Außenwand des Rotorblatts entlang strömt.

Es ist Aufgabe der vorliegenden Erfindung, ein verbessertes und effizientes Verfahren zum Enteisen eines Rotorblatts einer Windenergieanlage bzw. zum Enteisen der Rotorblätter einer Windenergieanlage vorzusehen.

Gelöst wird diese Aufgabe durch ein Verfahren zum Enteisen eines Rotorblatts einer Windenergieanlage, wobei mittels eines Lüfters ein Luftstrom durch das Rotorblatt geführt wird, wobei der Luftstrom über ein Luftleitsystem in einem Kreislauf geführt wird und zudem mittels einer Heizvorrichtung der Luftstrom erwärmt wird, das dadurch weitergebildet ist, dass ein Bruchteil des im Kreislauf geführten Luftstroms aus dem Kreislauf entfernt wird.

Durch das erfindungsgemäße Verfahren wird effizient dafür gesorgt, dass das entsprechende Rotorblatt enteist wird, wobei vorzugsweise der Luftstrom durch ein Luftleitsystem in dem Rotorblatt an die Stellen geleitet wird, die bevorzugt zu enteisen sind. Hierzu ist vorzugsweise eine Rotorblattenteisungsvorrichtung einer Windenergieanlage vorgesehen, wobei die Windenergieanlage einen Rotor mit wenigstens einem an einer Nabe angebrachten Rotorblatt aufweist, wobei die Rotorblattenteisungsvorrichtung eine Heizvorrichtung, einen Lüfter und ein Luftleitsystem aufweist.

Das Luftleitsystem weist vorzugsweise einen Luftstrom in Richtung einer Rotorblattspitze leitenden ersten Kanal und einen den Luftstrom in Richtung der Nabe leitenden zweiten Kanal auf. Der Luftstrom, der in Richtung der Rotorblattspitze geleitet wird, ist vorzugsweise ein von der Heizvorrichtung erwärmter Luftstrom. Der dann zurückgeleitete Luftstrom ist vorzugsweise ein abgekühlter Luftstrom. Die Abkühlung erfolgt insbesondere durch Abgabe von Wärme an das Rotorblattaußenmaterial, um dort anhaftendes Eis abzuschmelzen. Hierbei können die Kanäle vorzugsweise abschnittsweise isolierend ausgebildet sein, um möglichst wenig Wärmeverluste an Stellen zu erleiden, an denen das Rotorblatt nicht notwendigerweise enteist werden muss. Vorzugsweise strömt der, insbesondere erwärmte, Luftstrom an der Innenwandung einer Rotorblattnase entlang, und zwar vorzugsweise im vorderen Drittel der Rotorblattlänge, und zwar im Bereich der Rotorblattspitze.

Vorzugsweise ist ein im Wesentlichen geschlossenes Luftleitsystem vorgesehen. Das Luftleitsystem sorgt dafür, dass die im System befindliche Luft im Kreis geführt wird, so dass abgekühlte, aber noch etwas erwärmte rückgeführte Luft wieder erwärmt wird, wodurch weniger Heizleistung benötigt wird.

Das Luftleitsystem weist insbesondere ein möglichst geringes Volumen auf, um so auch die Heizleistung möglichst klein zu halten. Hierzu ist vorzugsweise vorgesehen, gezielt diejenigen Bereiche des Rotorblattes aufzuheizen, die stärker eisgefährdet sind. Es handelt sich hierbei insbesondere um den Nasenbereich der äußeren Hälfte bzw. des äußeren Drittels des Rotorblatts zur Rotorblattspitze hin. Vorzugsweise werden im Wesentlichen 40% des äußeren Teils des Rotorblattes zur Rotorblattspitze hin aufgeheizt. Zudem ist vorzugsweise vorgesehen, zumindest die Warmluftzuführung oder einen Teil der Warmluftzuführung isolierend auszubilden.

Vorzugsweise ist auf einer Druckseite des Lüfters eine, insbesondere im Hinblick auf die Größe vorgebbare, Öffnung, insbesondere zur kontinuierlichen, Abfuhr von Luft aus der Rotorblattenteisungsvorrichtung vorgesehen.

Durch Vorsehen der Öffnung ist es möglich, einen Bruchteil des im Kreislauf geführten Luftstromes aus dem Kreislauf zu entfernen. Vorzugsweise werden weniger als 10 %, insbesondere weniger als 6 %, insbesondere weniger als 4 %, insbesondere weniger als 2 %, der in dem Kreislauf geführten Luftmenge aus dem Kreislauf entfernt.

Durch diese Maßnahme wird ein Teil der Luft inklusive etwaiger enthaltener Ausgasungen aus dem Rotorblatt, Luftfeuchtigkeit und eventueller Stäube aus dem Rotorblatt aus dem Kreislauf ausgeblasen. Hierdurch findet zum einen eine Druckabsenkung im Luftkreislauf statt, zum anderen wird verhindert, dass sich Eis innerhalb des Rotorblattes absetzen kann, beispielsweise bei der Drehdurchführung.

Vorzugsweise wird die vorherige Maßnahme dadurch ergänzt, dass in einem Saugbereich des Luftleitsystems in einem Rotorblattinnenraum eine Öffnung vorgesehen ist, um Luft aus dem Rotorblattinnenraum in das Luftleitsystem einzubringen. Hierdurch wird eine kontinuierliche Spülung des Rotorblattinnenraums ermöglicht.

Unter einem Kreislauf wird insbesondere im Rahmen der Erfindung verstanden, dass Luft von der Rotorblattnabe in Richtung Rotorblattspitze gefördert wird und von der Rotorblattspitze wieder zurück zur Rotorblattnabe, um danach wieder zur Rotorblattspitze geführt zu werden usw. Bei einem derart im Wesentlichen geschlossenen System kann die Restwärme des zur Rotorblattnabe zurückgeführten Luftstroms, der vorzugsweise noch eine Restwärme aufweist, die höher als die Umgebungswärme ist, noch weiter verwendet werden, so dass eine sehr effiziente Enteisung möglich ist. So kann beispielsweise Luft in einem ersten Kanal bzw. ein Luftstrom in einem ersten Kanal von einer Rotorblattwurzel bzw. Rotorblattnabe zu der Rotorblattspitze geführt werden und im Bereich der Rotorblattspitze ab beispielsweise der Hälfte der Rotorblattlänge entsprechend der Luftstrom aufgeteilt werden in eine Komponente, die weiter längsaxial zur Rotorblattspitze geführt wird und eine Komponente, die quer dazu geführt wird, um einen warmen Luftstrom zur Rotorblattnase zu führen. Im Bereich der Rotorblattnase, dort wo das meiste Eis sich absetzt, wird der warme Luftstrom abgekühlt und entsprechend von der Rotorblattspitze bzw. dem Bereich zur Rotorblattspitze des Rotorblattes hin in abgekühlter Form wieder durch einen zweiten Kanal in Richtung der Rotorblattwurzel gefördert. Der geförderte Luftstrom wird somit in einem Luftleitsystem im Kreis geführt. In diesem Kreis enthalten ist auch ein Lüfter sowie eine Heizvorrichtung, beispielsweise in Form eines Heizregisters.

Unter einer Rotorblattnase wird im Rahmen der Erfindung insbesondere eine Blattvorderkante verstanden.

Vorzugsweise wird frische Luft zu dem Kreislauf hinzugeführt. Damit ist insbesondere auch gemeint, dass Frischluft in den Kreislauf hinzugegeben wird. Die frische Luft kann beispielsweise von außerhalb des Rotorblattes, insbesondere über die Nabe, hinzugeführt werden oder aus dem Innenraum des Rotorblattes. Zudem kann vorgesehen sein, die zu dem Kreislauf zugeführte Luft zu filtern. Unter frischer Luft wird im Rahmen der Erfindung Frischluft verstanden, die von außerhalb des im Kreislauf geführten Luftstroms zu dem Luftstrom hinzugefügt wird. Vorzugsweise wird Frischluft von außerhalb der Rotorblätter, insbesondere über die Nabe, in das Rotorblatt eingeführt.

Vorzugsweise ist in einem Schott des Rotorblattes eine Öffnung vorgesehen, durch die Frischluft in den Rotorblattinnenraum einbringbar ist. Vorzugsweise ist ein entsprechender Filter vorgesehen, um die frische Luft vor dem Einbringen in das Rotorblatt zu filtern.

Die vorgesehenen Öffnungen können teilweise oder auch alle vorzugsweise verschließbar sein und/oder in deren Durchmesser einstellbar sein. Dies geschieht vorzugsweise im Betrieb des Verfahrens zum Enteisen des Rotorblattes.

Durch das Vorsehen einer weiteren Öffnung in einem Schott des Rotorblattes und das Einführen von Frischluft kann die Konzentration von gesundheitsschädlichen Gasen im Blattinnenraum stetig verringert werden.

Vorzugsweise ist ein erster Luftfilter in dem ersten Kanal und/oder ein zweiter Luftfilter in dem zweiten Kanal vorgesehen. Hierdurch wird verhindert, dass sich Staubpartikel im Inneren des Rotorblattes, die während der Herstellung des Rotorblattes oder im Betrieb entstanden sind oder vielleicht noch entstehen, auf Heizstäben der Heizvorrichtung ablagern, wodurch eine Brandgefahr oder Verpuffungsgefahr beim Einschalten der Heizvorrichtung vermieden wird. Zudem kann hierdurch auch ein mechanischer Schutz für beispielsweise die Heizstäbe erzielt werden. Die Heizvorrichtung ist vorzugsweise ein Heizregister.

Vorzugsweise ist die Menge der in den Kreislauf hinzugeführten frischen Luft , insbesondere während des Verfahrens zum Enteisen eines Rotorblattes, einstellbar.

Besonders bevorzugt ist eine Ergänzung des Verfahrens, bei dem vor und/oder nach dem Erwärmen des Luftstromes mittels der Heizvorrichtung der Luftstrom, insbesondere über eine vorgebbare Zeit, in dem Kreislauf geführt wird. Hierbei ist insbesondere gemeint, dass, ohne weitere Heizenergie hinzuzufügen, der Luftstrom in dem Kreislauf geführt wird. Hierdurch findet eine effiziente Entfeuchtung des Systems statt. Vorzugsweise geschieht dieser Verfahrensschritt mit einer entsprechenden teilweisen Entlüftung, d.h. Abfuhr eines Bruchteils des im Kreislauf geführten Luftstromes aus dem Kreislauf statt und möglicherweise einer zusätzlichen, insbesondere aktiven, Belüftung bzw. Hinzufügung von Frischluft zu dem Kreislauf. Ein Entfeuchten ist insbesondere dann effizient, wenn nach einem Erwärmen des Luftstromes der Luftstrom noch im Kreis geführt wird. Dieses liegt darin begründet, dass erwärmte Luft eine größere Menge an Luftfeuchtigkeit aufnehmen kann und zudem Wasser oder geschmolzene Eisablagerungen aus dem Luftleitsystem entfernt werden können.

Vorzugsweise werden vor dem Erwärmen des Luftstroms in dem Luftstrom angeordnete Temperatursensoren auf Funktionalität geprüft. Hierbei wird insbesondere davon ausgegangen, dass der Luftstrom vor dem Erwärmen des Luftstroms in dem gesamten Luftleitsystem zu einer konstanten gleichen Temperatur führt, insbesondere wenn der Luftstrom mehrere Male im Kreislauf geführt wurde. Hierdurch können dann die Temperatursensoren auf Plausibilität überprüft werden. Diese sollten dann nämlich im Wesentlichen die gleiche Temperatur messen, sofern die Sensoren in Ordnung sind. Die Prüfung auf Funktionalität der Temperatursensoren fällt somit vorzugsweise nach einer vorgebbaren Zeit des im Kreislauf geförderten nicht erwärmten Luftstromes statt.

Vorzugsweise wird das Verfahren zum Enteisen des Rotorblattes ausgeführt, während das Rotorblatt in Lee eines Turms der Windenergieanlage angeordnet ist. Hierdurch werden Beschädigungen der Windenergieanlage durch Abfallen von Eis verhindert. Dies geschieht insbesondere dann, wenn eine entsprechende Windstärke, die vorgebbar ist, vorliegt. Das Verfahren zum Enteisen des Rotorblattes wird vorzugsweise erst ab einer vorgebbaren Windstärke ausgeführt.

Vorzugsweise ist die Rotorblattstellung beim Enteisen so, dass die Blattvorderkante in Lee angeordnet ist. Hierdurch ist die beheizte Blattvorderkante aus dem Wind gedreht, was zu einer effizienteren und schnelleren Enteisung führt.

Vorzugsweise wird das Rotorblatt bzw. der Rotor mit den entsprechenden Rotorblättern der Windrichtung nachgeführt, so dass das Rotorblatt während der Enteisung auf jeden Fall in Lee des Turms der Windenergieanlage angeordnet ist.

Vorzugsweise wird ein Rotor der Windenergieanlage umfassend wenigstens drei Rotorblätter so positioniert, dass wenigstens zwei Rotorblätter nach unten zeigen bzw. unterhalb der Horizontalen angeordnet sind, wobei eine Winkelverstellung wenigstens eines Rotorblattes vorgenommen wird, um die Position des Rotors im Wesentlichen beizubehalten. Hierdurch wird dafür gesorgt, dass die beiden Rotorblätter, die möglicherweise gleichzeitig oder zumindest teilweise hintereinander enteist werden sollen, während des Enteisens auch weiterhin nach unten zeigen, so dass abfallendes Eis die Windenergieanlage nicht beschädigt. Bei einer Windenergieanlage mit zwei Flügeln, kann ein Rotorblatt, das enteist werden soll nach unten zeigen oder alternativ können die Rotorblätter in der Horizontalen angeordnet sein und eines oder beide Rotorblätter enteist werden. Entsprechend sollten bei Windenergieanlagen mit mehr als drei Rotorblättern die zu enteisenden Rotorblätter beim Enteisen in der Horizontalen oder unterhalb der Horizontalen angeordnet sein.

Sehr effizient ist das Verfahren dann, wenn zwei Rotorblätter so enteist werden, dass nach dem Enteisen eines ersten Rotorblattes ein erwärmter Luftstrom aus dem ersten Rotorblatt in ein zweites Rotorblatt geleitet wird.

Vorzugsweise wird vor dem Einleiten des erwärmten Luftstromes in das zweite Rotorblatt ein nicht erwärmter Luftstrom in dem zweiten Rotorblatt im Kreislauf über ein weiteres Luftleitsystem geführt und ein Bruchteil des im Kreislauf geführten Luftstromes wird aus dem Kreislauf entfernt. Dies dient auch vorzugsweise zum Kalibrieren bzw. auf Funktionalität prüfen der Temperatursensoren in dem zweiten Rotorblatt und/oder zum Entfeuchten der in dem Rotorblatt enthaltenen Luft. Die entsprechenden Maßnahmen, die in dem ersten Rotorblatt bzw. in dem Rotorblatt wie vorstehend beschrieben wurden, können auch im zweiten Rotorblatt zum Enteisen dieses Rotorblattes ausgeführt werden.

Vorzugsweise wird oder ist die Dauer des Enteisungsverfahrens und/oder die zugeführte Wärmemenge in Abhängigkeit von wenigstens einer festgestellten Anfangsbedingung vorgegeben. Unter einer Anfangsbedingung wird im Rahmen der Erfindung insbesondere eine Temperatur des Luftstroms im Inneren des Rotorblattes, insbesondere in dem Luftleitsystem, verstanden. Vorzugsweise ist die Temperatur beim Führen des Luftstromes in dem Kreislauf, ohne dass der Luftstrom erwärmt wird, gemeint, wobei der Luftstrom eine vorgebbare Zeit im Kreislauf geführt wird. Zudem kann als Anfangsbedingung eine Windgeschwindigkeit, eine Windrichtung, eine Außentemperatur und/oder eine Luftfeuchtigkeit verstanden werden. Vorzugsweise wird oder ist die Dauer des Enteisungsverfahrens und/oder die zugeführte Wärmemenge in Abhängigkeit von mehreren festgestellten Anfangsbedingungen vorgegeben.

Vorzugsweise geschieht beim Erwärmen des Luftstroms eine Regelung der Temperatur im Vorlauf, insbesondere in der Heizvorrichtung. Hierdurch kann bei systembedingter maximaler Leistung eine sehr effiziente und schnelle Enteisung durchgeführt werden.

Vorzugsweise wird der Luftstrom über eine zusätzliche Entfeuchtungsvorrichtung entfeuchtet. Beispielsweise kann hierzu eine gekühlte Fläche vorgesehen sein, an der Luftfeuchtigkeit kondensiert, die dann entsprechend aus dem System bzw. der Windenergieanlage abgeführt wird.

Um an Rotorblättern anhaftendes Eis abzutauen bzw. abwerfen zu können, werden die zu enteisenden Oberflächen der Rotorblätter auf mehr als 0° C erwärmt. Die hierfür notwendige Wärmeenergie und der erforderliche Luftstrom werden von vorzugsweise je einer Rotorblattenteisungsvorrichtung je Rotorblatt zur Verfügung gestellt. Hierbei sind eine Heizvorrichtung und ein Lüfter vorzugsweise in Form einer Lüfter-Heizeinheit vorgesehen, die innerhalb einer Blattwurzel des Rotorblattes angeordnet ist und an der Rotornabe befestigt ist.

Die Lüfter-Heizeinheit umfasst insbesondere einen Lüfter, eine Heizvorrichtung, beispielsweise ein Heizregister, und ein konzentrisches Doppelrohr in Form eines ersten und eines zweiten Kanals für den Vorlauf und den Rücklauf der Luft in dem Luftleitsystem. Zu dem konzentrischen Doppelrohr existiert vorzugsweise ein Gegenstück, das mit dem Rotorblatt bei der Pitchverstellung mitdreht. Das Gegenstück des Rotorblatts und das konzentrische Doppelrohr der Lüfter-Heizeinheit sind vorzugsweise über eine Drehdurchführung miteinander verbunden.

Über eine Steuerung und Regelung, die vorzugsweise extern zu der Lüfter-Heizeinheit vorgesehen ist, werden die Heizvorrichtung und der Lüfter angesteuert und vorzugsweise auch überwacht. Das Luftleitsystem bzw. das Lüftungssystem ist je Rotorblatt vom Grundprinzip her ein geschlossenes System, wobei es vorgesehen sein kann, geringe Luftmengen auszutauschen bzw. zu erneuern. Auf diese Weise bleibt die Restwärme im Rücklauf bei der Rotorblattenteisung im Wesentlichen erhalten.

Das Luftleitsystem weist vorzugsweise einen ersten Kanal auf, der ausgebildet ist, einen Luftstrom von der Lüfter-Heizeinheit im Bereich der Rotorblattwurzel zur Rotorblattspitze zu leiten und einen zweiten Kanal, mittels dessen der Luftstrom von der Rotorblattspitze zur Rotorblattwurzel zurückgeleitet wird.

Das im Kreis geführte Luftvolumen in dem Luftleitsystem ist vorzugsweise 6 m³ bis 20 m³. Besonders bevorzugt ist ein Volumen von 8 m³ bis 12 m³. Diese Werte gelten vorzugsweise bei Blattlängen von 50 m. In einem Ausführungsbeispiel der Rotorblattenteisungsvorrichtung wird zwischen 800 m³/h und 2000 m³/h Luft im Kreislauf gefördert. Es kommt vorzugsweise ca. 20 m³/h bis 100 m³/h frische Luft hinzu. Jedoch ist die Erfindung nicht auf diese Bereiche beschränkt. Die angegebenen Bereiche stellen bevorzugte Ausführungsformen dar.

Das Verhältnis von im Kreislauf geförderter Luft zu frischer hinzugefügter Luft oder Frischluft ist vorzugsweise zwischen 20 und 40, besonders bevorzugt bei 25 bis 30.

Aufgrund der festen Installation der Heizvorrichtung und auch des Lüfters bzw. der Lüfter-Heizeinheit an der Nabe muss die elektrische Energieversorgung nicht in den rotierenden Teil des Rotorblattes geführt werden, zudem kann hierdurch für die elektrische Energieversorgung und auch die Steuervorrichtung ein ausreichender Blitzschutz sichergestellt werden.

Durch das konzentrische Doppelrohr, das vorzugsweise in der Drehachse des Rotorblattes positioniert ist, wird die warme Zuluft über ein passendes Gegenstück in das Kanalsystem bzw. das Luftleitsystem des Rotorblattes eingeblasen und der abgekühlte Rücklauf wird wieder zur Ansaugseite des Lüfters geführt. Durch diesen Kreislauf kann die zur Verfügung stehende Heiz- und Lüfterleistung effizient genutzt werden.

Die Komponenten der Luftführung bzw. des Luftleitsystems sind vorzugsweise teilweise thermisch isoliert ausgeführt. Zudem kann im Luftkreislauf, d.h. im Luftleitsystem auch wenigstens eine weitere Komponente eingebracht sein, die beispielsweise eine Umkehr der definierten Luftströmung mechanisch verhindert. Hierbei kann es sich um eine Rückschlagklappe oder ein Rückschlagventil handeln.

Vorzugsweise wird die vordere Blattkammer wenigstens teilweise als Rücklaufleitung zur Vereinfachung des Luftführungssystems verwendet. Hierdurch kann Material eingespart werden. Gleichwohl ist für diesen Fall das durchströmte Luftvolumen größer. Zudem sind dann die Druckverluste im Kreislaufsystem bzw. im Luftleitsystem reduziert, wodurch der Volumenstrom zunimmt und die Rücklauftemperatur steigt, und zwar bei gleichbleibender Vorlauftemperatur. Dieses kann die Wärmeübergangsverhältnisse verbessern.

Durch eine, insbesondere passive, Außenluftbeimischung können verschiedene Verfahrensführungen durchgeführt werden. Hierbei können lokale Ausgasungen im System bzw. des Rotorblattmaterials homogenisiert und mit Außenluft verdünnt werden. Bevorzugt kann eine aktive Außenluftbeimischung durchgeführt werden, wobei hierbei aktiv und nach Bedarf eine Klappensteuerung vorgesehen ist, mittels der die Menge der Außenluftbeimischung eingestellt werden kann.

Zudem können Staubansammlungen entsprechenden Filtern zugeführt werden oder teilweise an die Außenluft abgegeben werden.

Außerdem findet vorzugsweise eine thermische Homogenisierung des Luftstromes insbesondere vor dem Erwärmen des Luftstromes, im Kreislauf statt, so dass Sensoren auf Plausibilität, insbesondere Temperatursensoren auf Plausibilität überprüft werden können.

Ferner wird vorzugsweise nach der Beendigung des Enteisens und einem Abschalten einer Heizvorrichtung, d.h. keiner weiteren Zufuhr von Wärmeenergie in den Luftstrom vorzugsweise der Luftstrom weiter aufrechterhalten, um eine Auskühlung der Heizvorrichtung auf weitestgehend homogene Systemtemperaturen zu ermöglichen. Hierdurch kann vorzugsweise das System, insbesondere das Luftleitsystem, entsprechend gespült werden, um eventuell aufgenommene Feuchtigkeit aus dem System auszutragen. Damit wird eine Kondensation von Wasser im Luftleitsystem und insbesondere beispielsweise bei einer Drehdurchführung vermieden, wodurch verhindert wird, dass dort Kondensat ausfrieren kann und Komponenten beispielsweise bei Rotorblattverstellvorgängen Schaden nehmen können.

Vorzugsweise wird das erste zu enteisende Rotorblatt so ausgewählt, dass nach dem Eisabfall eine entstehende Unwucht des Rotors eine Drehung des Rotors in gewünschter Weise unterstützt.

Vorzugsweise ist ein Neigungssensor vorgesehen, um eine Rotorpositionserfassung zu ermöglichen. Vorzugsweise ist der Neigungssensor in einem Schaltschrank zur Versorgung und/oder Steuerung einer Rotorblattenteisungsvorrichtung angeordnet.

Vorzugsweise werden die Heizzeit und die aufgebrachte Wärmemenge in Abhängigkeit von einer Anfangsbedingung, wie beispielsweise der Temperatur des Luftstroms beim ersten Spülen, die Windgeschwindigkeit, die Außentemperatur oder ähnliches, festgelegt. Vorzugsweise werden die Heizzeit und die aufgebrachte Wärmemenge in Abhängigkeit einer aktuellen Rücklauftemperatur beim Enteisen angepasst. Die Heizzeit kann beispielsweise zwischen zwei und fünf Stunden variieren. Hierbei wird vorzugsweise die Wärmemenge, die zum Enteisen benötigt wird, und zwar aufgrund von Berechnungen oder Abschätzungen aufgrund der Anfangsbedingungen, vorgegeben. Zudem kann hierdurch die minimal zugeführte Heizenergie festgelegt werden, die in der Heizzeit zum Einsatz kommen soll.

Vorzugsweise wird zum Einstellen des Rotors eine Rotorpositionserfassung über einen Neigungssensor oder mehrere Neigungssensoren vorgenommen. Dieser kann fest in einer Steuervorrichtung, die den Enteisungsvorgang bzw. das Enteisungsverfahren steuert, verbaut sein und damit in Bezug zu einem Rotorblatt ortsfest sein. Vorzugsweise ist eine einzige Steuervorrichtung vorgesehen, die relativ zu einer Rotorblattnabe innerhalb eines Rotorblattes fixiert ist. Vorzugsweise dient diese Steuerrichtung dazu, die Enteisungsvorgänge aller Rotorblätter zu steuern.

Vorzugsweise findet eine Temperaturmessung an verschiedenen Stellen im Luftstrom statt. Die Temperaturmesswerte werden der Steuervorrichtung zur Verfügung gestellt und mittels der Temperaturmesswerte wird eine Steuerung des Enteisungsvorgangs vorgenommen. Vorzugsweise existieren weitere Temperaturmesssensoren beispielsweise in der Heizvorrichtung und/oder dem ersten Kanal, also im Vorlauf, die für eine redundante Lastkreisabschaltung sorgen. Hierbei kann vorgesehen sein, dass der Temperaturgrenzwert, ab dem eine redundante Lastkreisabschaltung vorgenommen wird, höher ist als der Temperaturmesswert, der über die Steuervorrichtung beispielsweise zu einem Abschalten der Heizvorrichtung führt.

Es werden zudem vorzugsweise Überwachungen durchgeführt. Insbesondere wird überprüft, ob die elektrisch zugefügte Heizenergie mindestens der erwarteten bzw. vorausberechneten Wärmemenge entspricht. Für den Fall, dass dieses nicht so ist, kann beispielsweise darauf geschlossen werden, dass der Luftstrom nicht über den Bereich geführt wurde, bei dem eine Enteisung vorzunehmen war. In diesem Fall kann beispielsweise ein Rohrbruch vorliegen.

Zudem wird vorzugsweise eine Plausibilitätskontrolle einer Rücklauftemperatur auf eine maximal mögliche Temperatur und eine minimal erwartete Temperatur nach einer Aufheizphase durchgeführt. Vorzugsweise kann der Leistungsbedarf für das Enteisen durch Bilden einer Differenz aus Vorlauf- und Rücklauftemperatur ermittelt werden und die ermittelte Leistung mit der zugeführten Leistung verglichen werden. Hierdurch kann auch überprüft werden, ob das Enteisungsverfahren richtig funktioniert.

Vorzugsweise ist eine redundante Lastkreisabschaltung vorgesehen. Bei einem entsprechenden Fehler, der beispielsweise eine zu hohe Vorlauftemperatur von über 65 °C oder über 50 °C sein kann, wobei diese Temperatur vorgebbar ist, kann über einen redundanten Temperatursensor die Heizvorrichtung abgeschaltet werden. Vorzugsweise liegt die zu hohe Vorlauftemperatur bei zwischen 70 °C und 85°C. Das Abschalten der Heizvorrichtung geschieht vorzugsweise bei einem Defekt des Temperatursensors, der eine Vorlauftemperatur einer Steuervorrichtung zum Steuern der Heizvorrichtung und/oder des Lüfters misst. Der redundante Sensor ist ein weiterer Temperatursensor, der die Heizvorrichtung unmittelbar bei einem zu hohen Messwert ausschaltet. Hierzu ist ein Hauptschalter entsprechend auslösbar. Vorzugsweise ist hierzu die Temperaturschwelle, ab der ein unmittelbares Ausschalten der Heizvorrichtung vorgesehen ist, höher als die über die Steuervorrichtung eingestellte Temperaturschwelle.

Zudem kann eine Auslösung des Hauptschalters vorgesehen sein, wenn eine Fehlfunktion der Lastkreisabschaltung erkannt wird. Dies geschieht beispielsweise über einen Schütz-Schalter.

Vorzugsweise werden elektronische Lastschaltrelais zur optimalen Unterstützung der Vorlauftemperaturregelung und/oder der Leistungsaufteilung zwischen einem ersten zu enteisenden Rotorblatt und einem zweiten zu enteisenden Rotorblatt eingesetzt.

Vorzugsweise wird die Vorlauftemperatur während des Heizens bzw. während des Heizvorgangs simuliert und mit der gemessenen Vorlauftemperatur verglichen. Vorzugsweise hat die Vorlauftemperatur ein PT1-Verhalten.

Durch die parallele oder gleichzeitige Simulation der Vorlauftemperatur während des Heizvorgangs und des Vergleichs der simulierten und der gemessenen Vorlauftemperatur können verschiedene Hardware- oder Softwarefehler erkannt werden, wie beispielsweise, ob ein Filter verstopft ist oder ein Luftweg eingeengt ist. Zudem kann festgestellt werden, ob die Lüfterleistung zu gering oder zu hoch ist oder ob der Luftweg bzw. die Kanäle aufgrund einer gebrochenen Leitung beispielsweise einen Differenzdruckverlust aufweisen. Es kann auch erkannt werden, ob zu viel Heizenergie hinzugeführt wurde, beispielsweise durch einen Kurzschluss eines elektrischen Lastrelais, oder ob Heizstäbe der Heizvorrichtung defekt sind. Die aufgezeigten möglichen Fehler sind nur beispielhaft erwähnt.

Mit der zugeführten elektrischen Leistung, insbesondere der gemessenen Eintrittstemperatur bzw. Rücklauftemperatur in die Lüfter-Heizeinheit, und den Systemeigenschaften, die im Wesentlichen durch das Energiespeicherverhalten und damit durch die Übertragungsfunktion bestimmt sind, beispielsweise über die Masse des Heizregisters bzw. der Heizvorrichtung, ist eine Simulation der Vorlauftemperatur möglich. Bei entsprechend gut simulierbaren Heizvorrichtungen bzw. Lüfter-Heizeinheiten kann auf eine Plausibilitätskontrolle der Vorlauftemperatur an die gemessene Heizvorrichtungstemperatur und/oder eine Ermittlung des Leistungsbedarfs durch die Bildung der Differenz aus Vorlauf- und Rücklauftemperatur an einen Vergleich der ermittelten Leistungen mit der zugeführten Leistung möglicherweise verzichtet werden.

Vorzugsweise wird die Rücklauftemperatur gemessen und überwacht, ob diese innerhalb vorgebbarer Grenzen liegt.

Vorzugsweise wird der Bruchteil des Luftstroms, der aus dem Kreislauf entfernt wird, zwischen einem Lüfter und einer Heizvorrichtung, ausgelassen, wobei vorzugsweise eine Öffnung oder ein Spülluftauslass vorgesehen ist.

Vorzugsweise wird die Luftmenge an dem Spülluftauslass gemessen, wobei dieses insbesondere bei einer Wartung, vorzugsweise ohne ein Erwärmen des Luftstromes geschieht. Der Messwert kann dann mit einem vorgegebenen Wert verglichen werden und bei einer zu großen Abweichung kann auf ein Rotorblattschaden oder ein Luftleitsystemschaden geschlossen werden. Alternativ kann eine kontinuierliche Luftmengenmessung an dem Spülluftauslass vorgesehen sein, um Fehler automatisch zu erkennen.

Eine Fehlerüberwachung ist ferner durch eine Differenzdruckmessung möglich, wobei zu erwartende Differenzdrücke von den Auslegungen verwendeter Öffnungen und der Leistung des Lüfters abhängen.

Vorzugsweise wird anhand einer Druckmessung im Rotorblatt erkannt, ob das Rotorblatt luftdicht ist bzw. die Teile des Rotorblattes, die luftdicht sein sollen, dieses auch sind. Es kann auch in Zeiten, in denen keine Eisgefahr besteht, beispielsweise bei Außentemperaturen oberhalb des Gefrierpunktes, ein Luftstrom erzeugt werden, um Schäden, beispielsweise Undichtigkeiten, des Rotorblattes zu prüfen.

Vorzugsweise wird der Druck der Luft im Luftleitsystem gesteuert. Dieses kann über die Lüfterleistung und/oder die Größe der Öffnungen für Zu- und Abluft der Spülluft geschehen. Bei Vorsehen eines Unterdruckes im Rotorblatt kann keine erwärmte Luft an ungewollten Stellen austreten. Dieses führt zu einer effizienten Enteisung. Ferner kann hierdurch verhindert werden, dass Rotorblattteile, die systemkritisch sind, nicht mit einer zu hohen Vorlauftemperatur über eine zu lange Zeit beansprucht werden. Zudem kann so auch die Vorlauftemperatur erhöht werden, was die Enteisungsdauer reduziert.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen. Die vorstehenden und/oder nachstehenden bevorzugten Ausführungsformen können mit den vorstehend genannten einzelnen Merkmalen oder erfindungsgemäßen Lösungen vorteilhaft kombiniert werden.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Ansicht einer Windenergieanlage,
- Fig. 2: eine schematische Darstellung eines Rotorblattes an einer Nabe und
- Fig. 3: eine schematische Darstellung einer erfindungsgemäßen Rotorblattenteisungsvorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

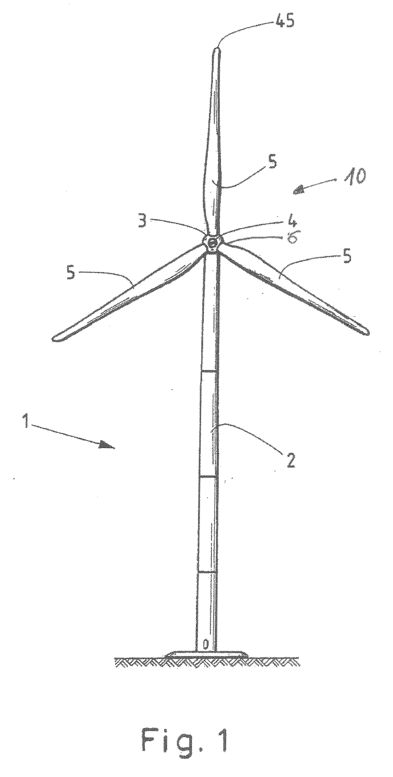

Fig. 1 zeigt schematisch eine Windenergieanlage 1. Die Windenergieanlage 1 umfasst einen Turm 2, auf der eine Gondel 3 vorgesehen ist. An einer Nabe 4 sind drei Rotorblätter 5 angeordnet. Es handelt sich um eine Windenergieanlage des Horizontalachsentyps. Die horizontale Achse stellt auch gleichzeitig die Rotationsachse des aus der Nabe 4 und den Rotorblättern 5 sich bildenden Rotors 10 der Windenergieanlage 1 dar. In der Fig. 1 zeigt die Rotationsachse aus der Zeichenebene im Wesentlichen senkrecht heraus.

Jedes Rotorblatt 5 erstreckt sich von einer Rotorblattwurzel 6, die an der Nabe 4 angeordnet ist zu einer Rotorblattspitze 45.

Bei Windkraftanlagen 1, die in kalten Regionen mit vereisungsbildender Atmosphäre aufgestellt sind, kommt es häufig zu Eisanlagerungen am Rotorblatt, und zwar so stark, dass sich die Leistung der Anlage erheblich reduziert, was im Extremfall zur Abschaltung der Anlage führen kann. Um den Betrieb der Windenergieanlage zu gewährleisten ist vorgesehen, die Rotorblätter 5 durch entsprechende Maßnahmen zu enteisen.

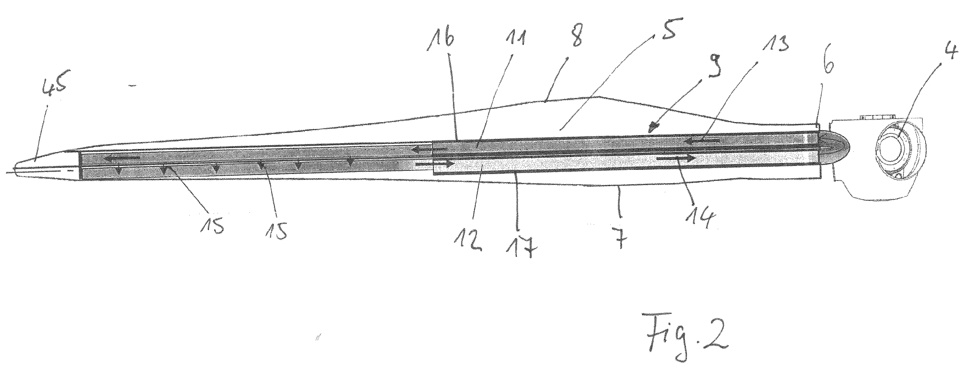

Hierzu wird eine Rotorblattenteisungsvorrichtung einer Windenergieanlage 1 vorgeschlagen, die, wie schematisch in Fig. 2 angedeutet ist, in einem Luftleitsystem 9 Luft bzw. einen Luftstrom 13 im Wesentlichen in einem Kreislauf führt, die oder der in der Nähe der Nabe 4 bzw. in der Nähe der Rotorblattwurzel oder in der Rotorblattwurzel 6 erwärmt wird und zur Rotorblattspitze 45 in einem ersten Kanal 11 geleitet wird. Im Spitzenbereich des Rotorblattes 5 gelangt die warme Luft in einen zweiten Kanal 12, der in der Nähe der Blattvorderkante 7 angeordnet ist. Der erste Kanal 11 ist mehr zur Hinterkante 8 des Rotorblattes 5 angeordnet.

Um die Wärmeenergie an die Stellen zu leiten, bei der die Vereisung am wahrscheinlichsten ist bzw. am stärksten, wird der erste Kanal 11 mit einer Isolierung 16 versehen, um dem Luftstrom 13 mit möglichst wenig Wärmeverlusten in Richtung Rotorblattspitze 45 zu leiten. Im Bereich der Rotorblattspitze 45 wird vorzugsweise über Querströmungen 15 der Luftstrom 13 in Richtung Rotorblattvorderkante 7 geleitet, um die Blattvorderkante, die am meisten zur Vereisung neigt, und zwar insbesondere der Teil der Rotorblattvorderkante, der zur Rotorblattspitze 45 angeordnet ist. Hierdurch wird Eis entsprechend angetaut und kann abfallen. Die etwas abgekühlte Luft wird als abgekühlter Luftstrom 14 wieder zu der in Fig. 2 nicht dargestellten Heizung gefördert. Auf dem Weg dorthin ist der zweite Kanal 12 mit einer Isolierung 17 versehen, um die Restwärme in dem abgekühlten Luftstrom nicht an Stellen zu verlieren, wo diese nicht abgegeben werden muss.

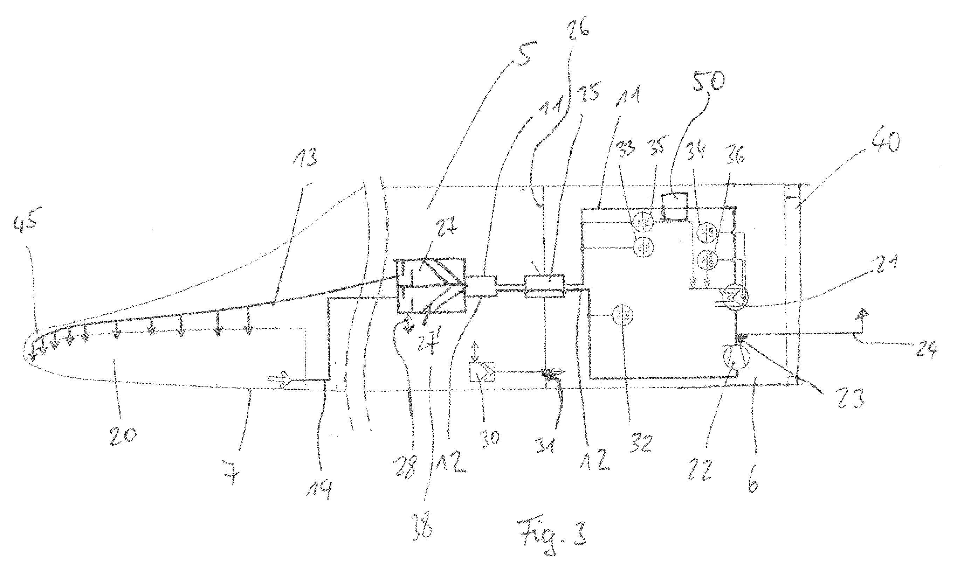

Fig. 3 zeigt schematisch eine erfindungsgemäße Rotorblattenteisungsvorrichtung einer Windenergieanlage 1. Das Rotorblatt 5 ist an der Nabe 4, die nur angedeutet ist, angebracht. Ferner ist mit der Nabe ortsfest verbunden eine Heizvorrichtung 21, die als Heizregister ausgestaltet sein kann und der Lüfter 22.

Mittels der Heizvorrichtung 21 und dem Lüfter 22 wird warme Luft durch den ersten Kanal 11 über die Drehdurchführung 25 in Richtung der Rotorblattspitze 45 geleitet. Die warme Luft wird über einen Filter 27 gefiltert in Richtung der Rotorblattspitze 45 weitergeleitet. Ein entsprechender Luftstrom 13 ist hier schematisch angedeutet. Die Pfeile sollen die Warmluftströme darstellen, die in eine Blattheizkammer 20, die an der Rotorblattnase bzw. Rotorblattvorderkante im Bereich der Rotorblattspitze 45 angeordnet ist, geleitet werden.

Abgekühlte Luft 14 bzw. ein abgekühlter Luftstrom 14 gelangt zurück über einen Luftfilter 27' und den zweiten Kanal 12 über die Drehdurchführung 25 in Richtung des Lüfters 22. Der im Kreislauf geführte Luftstrom umfasst den Luftstrom 13 und den Luftstrom 14.

Um die Luftmengen bzw. die Wärmemenge entsprechend zu steuern oder zu regeln, sind mehrere Temperaturfühler vorgesehen. Beispielsweise der Temperaturfühler 32, der die Temperatur der zurückgeführten Luft misst sowie die Temperaturfühler 33 und 34. Der Temperaturfühler 34 misst die Heizvorrichtungstemperatur bzw. die Heizregistertemperatur und der Temperaturfühler 33 misst die Vorlauftemperatur. Bei der Vorlauftemperatur handelt es sich um die Temperatur die in Strömungsrichtung des Luftstromes unmittelbar hinter der Heizvorrichtung herrscht. Die Messwerte der Sensoren 32, 33 und 34 werden einem nicht dargestellten Steuergerät 44 zur Verfügung gestellt, um die Heizvorrichtung 21 und den Lüfter 22 zu steuern bzw. zu regeln.

Als Sicherheitsmaßnahme ist zudem ein Temperaturfühler 35 vorgesehen, der bei beispielsweise einer zu hohen Vorlauftemperatur unmittelbar die Heizvorrichtung 21 ausschalten kann. Entsprechend kann noch über den Temperaturfühler 36, mittels der die Heizvorrichtungstemperatur gemessen wird, die Heizvorrichtung abgeschaltet werden.

Es ist zudem auf der Druckseite des Lüfters 22 eine kleine Öffnung 23 vorgesehen, über die ein kleiner Volumenstrom der im Kreis geführten Luft über eine Luftleitung oder Spülluftleitung 24 abgeführt werden kann. Zudem kann eine Öffnung 28 an der Saugseite des Luftleitsystems 9 bzw. eingangsseitig des Filters 27' vorgesehen sein, um Luft aus dem Rotorblattinneren abzusaugen und somit ein Entfernen von ungewünschten Gasen aus dem Rotorblattinnenraum zu ermöglichen.

Das System kann beispielsweise insgesamt auf Unterdruck gefahren werden.

Zudem kann in dem Schott 26, in dem die Drehdurchführung 25 angeordnet ist, eine Öffnung 31 vorgesehen sein, mittels der Frischluft, die beispielsweise über die Nabe 40 in das Rotorblattinnere gelangt, über einen Filter 30 gefiltert in den Rotorblattinnenraum in Fig. 3 links von dem Schott 26 gelangt. Hierdurch ist eine permanente Spülung gewährleistet.

Durch die dargestellten Merkmale aus Fig. 3 ist das Verfahren zum Enteisen eines Rotorblattes einer Windenergieanlage effizient auszuführen. Es kann optional noch ein Entfeuchter 50 vorgesehen sein, um den Luftstrom 13, der im Kreislauf in dem Luftleitsystem geführt wird, zu entfeuchten. Hierbei kann es sich beispielsweise um eine Kühlvorrichtung handeln, die den Kanal 11 an einer bestimmten Wegstrecke abkühlt, wobei das Kondensat aufgefangen wird und beispielsweise über eine Pumpe oder durch Schwerkraft über einen nicht dargestellten Schlauch aus dem Rotorblatt entfernt wird.

Zudem kann vorgesehen sein, die Zu- und Abluftöffnung, mittels der ein Bruchteil des im Kreislauf geführten Luftstromes 13 aus dem Kreislauf entfernt wird bzw. Frischluft zugeführt werden kann, vom Querschnitt veränderlich vorzusehen oder sogar verschließbar vorzusehen. Hierdurch kann gezielt die Menge des aus dem Kreislauf geführten Luftstroms 13 bzw. die Menge der in den Kreislauf hinzugefügten frischen Luft im Betrieb eingestellt werden.

Vorzugsweise wird warme Abluft, die aus dem Kreislauf entfernt wird, auf ein Pitchgetriebe oder ein Antriebssystem des Rotorblattes gerichtet.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 1: Windenergieanlage
- 2: Turm
- 3: Gondel
- 4: Nabe
- 5: Rotorblatt
- 6: Rotorblattwurzel
- 7: Blattvorderkante
- 8: Blatthinterkante
- 9: Luftleitsystem
- 10: Rotor
- 11: erster Kanal
- 12: zweiter Kanal
- 13: Luftstrom
- 14: abgekühlter Luftstrom
- 15: Querströmung
- 16: Isolierung
- 17: Isolierung
- 20: Blattheizkammer
- 21: Heizvorrichtung
- 22: Lüfter
- 23: Öffnung Druckseite
- 24: Spülluftleitung
- 25: Drehdurchführung
- 26: Schott
- 27, 27': Filter
- 28: Öffnung Saugseite
- 30: Filter
- 31: Öffnung Blattschott
- 32: Temperaturfühler
- 33: Temperaturfühler
- 34: Temperaturfühler
- 35: Temperaturfühler mit Hardwareabschaltung
- 36: Temperaturfühler mit Hardwareabschaltung
- 37: Halterung
- 38: Rotorblattinnenraum
- 40: Nabenanschluss
- 45: Rotorblattspitze
- 46: Drehachse
- 50: Entfeuchter

## Patentansprüche

1. Verfahren zum Enteisen eines Rotorblatts (5) einer Windenergieanlage (1), wobei mittels eines Lüfters (22) ein Luftstrom (13, 14) durch das Rotorblatt (5) geführt wird, wobei der Luftstrom (13, 14) über ein Luftleitsystem (9) in einem Kreislauf geführt wird und zudem mittels einer Heizvorrichtung (21) der Luftstrom (13, 14) erwärmt wird, **dadurch gekennzeichnet, dass** ein Bruchteil des im Kreislauf geführten Luftstroms (13, 14) aus dem Kreislauf entfernt wird.

2. Verfahren nach Anspruch 1, **dadurch gekennzeichnet, dass** frische Luft zu dem Kreislauf hinzugeführt wird.

3. Verfahren nach Anspruch 1 oder 2, **dadurch gekennzeichnet, dass** vor und/oder nach dem Erwärmen des Luftstroms (13, 14) mittels der Heizvorrichtung (21) der Luftstrom (13, 14), insbesondere über eine vorgebbare Zeit, in dem Kreislauf geführt wird.

4. Verfahren nach Anspruch 3, **dadurch gekennzeichnet, dass** vor dem Erwärmen des Luftstroms (13, 14) in dem Luftstrom (13, 14) angeordnete Temperatursensoren (32 - 36) auf Funktionalität geprüft werden.

5. Verfahren nach einem der Ansprüche 1 bis 4, **dadurch gekennzeichnet, dass** das Verfahren zum Enteisen des Rotorblatts (5) ausgeführt wird, während das Rotorblatt (5) in Lee eines Turms (2) der Windenergieanlage (1) angeordnet ist.

6. Verfahren nach einem der Ansprüche 1 bis 5, **dadurch gekennzeichnet, dass** ein Rotor (10) der Windenergieanlage (1) umfassend wenigstens drei Rotorblätter (5) so positioniert wird, dass zwei Rotorblätter (5) nach unten zeigen, wobei eine Winkelverstellung wenigstens eines Rotorblattes (5) vorgenommen wird, um die Position des Rotors (10) im Wesentlichen beizubehalten.

7. Verfahren nach einem der Ansprüche 1 bis 6, **dadurch gekennzeichnet, dass** zwei Rotorblätter (5) so enteist werden, dass nach dem Enteisen eines ersten Rotorblattes (5) ein erwärmter Luftstrom (13, 14) aus dem ersten Rotorblatt (5) in ein zweites Rotorblatt (5) geleitet wird.

8. Verfahren nach Anspruch 7, **dadurch gekennzeichnet, dass** vor dem Einleiten des erwärmten Luftstroms (13, 14) in das zweite Rotorblatt (5) ein nicht erwärmter Luftstrom (13, 14) in dem zweiten Rotorblatt (5) im Kreislauf über ein weiteres Luftleitsystem (9) geführt wird und ein Bruchteil des im Kreislauf geführten Luftstroms (13, 14) aus dem Kreislauf entfernt wird.

9. Verfahren nach einem der Ansprüche 1 bis 8, **dadurch gekennzeichnet, dass** die Dauer des Enteisungsverfahrens und/oder die zugeführte Wärmemenge in Abhängigkeit von wenigstens einer festgestellten Anfangsbedingung vorgegeben wird oder ist.

10. Verfahren nach einem der Ansprüche 1 bis 9, **dadurch gekennzeichnet, dass** beim Erwärmen des Luftstroms (13, 14) eine Regelung der Temperatur im Vorlauf, insbesondere in der Heizvorrichtung (21), geschieht.

11. Verfahren nach einem der Ansprüche 1 bis 10, **dadurch gekennzeichnet, dass** der Luftstrom (13, 14) über eine zusätzliche Entfeuchtungsvorrichtung (50) entfeuchtet wird.
